# FASCICULE DE BREVET EUROPEEN

(11) **EP 2 160 255 B1**
(45) Date de publication et mention de la délivrance du brevet: **14.08.2013**
(21) Numéro de dépôt: 08760597.8
(22) Date de dépôt: 05.06.2008
(51) Int. Cl.: B05D 3/02, B05D 7/20

(54) **PROCEDE DE DEPOT D'UN SOLUTE SUR UN FIL METALLIQUE**
VERFAHREN ZUR ABLAGERUNG EINES GELÖSTEN STOFFES AUF EINEM METALLDRAHT
METHOD FOR DEPOSITING A SOLUTE ON A METAL WIRE

(30) Priorité: 20.06.2007 FR 0704450
(43) Date de publication de la demande: 10.03.2010
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: HINC, Henri, F-63540 Romagnat (FR); CHEVREL, Guy, F-63190 Lezoux (FR)
(74) Mandataire: Reynaud, Georges
(86) Numéro de dépôt international: PCT/EP2008/057022
(87) Numéro de publication internationale: WO 2008/155237

(56) Documents cités:
- JP-A- 1 139 178
- JP-A- 6 119 836
- JP-A- 60 136 111
- JP-A- 2004 134 320
- US-A- 3 882 665
- US-A- 4 694 586
- PUENTE J-M ET AL: "FAST CURING FOR ORGANIC AND INORGANIC COATINGS BY HIGH FREQUENCY INDUCTION REVETEMENTS ORGANIQUES ET INORGANIQUES PAR INDUCTION A HAUTE FREQUENCE" REVUE DE METALLURGIE, REVUE DE METALLURGIE, PARIS, FR, vol. 100, no. 6, juin 2003 (2003-06), pages 653-657, XP001177255 ISSN: 0035-1563

## Description

L'invention concerne le domaine de fabrication des câbles et fils métalliques, et plus particulièrement l'étape au cours de laquelle on réalise un traitement de ces fils.

Il s'avère en effet utile, dans de nombreux procédés, de déposer à la surface du fil une couche d'épaisseur maîtrisée d'un produit donné, de manière à faciliter la mise en oeuvre du fil dans une étape ultérieure de fabrication.

C'est le cas par exemple lorsque l'on désire utiliser le fil comme fibre de renfort d'un matériau n'ayant pas les propriétés mécaniques désirées. Il est alors nécessaire de traiter le fil pour lui permettre d'adhérer parfaitement avec la matrice du matériau en question, en déposant un produit de liaison sur la surface du fil, de manière à rendre la coopération entre ces deux composants la plus efficace possible. Ce type d'application est couramment utilisé dans l'industrie du pneumatique ou encore dans l'industrie des plastiques renforcés.

Dans le cadre de la présente description, le terme fil doit être compris dans un sens tout à fait général, englobant un mono filament, un multi filament, un câblé ou un retors ou un assemblage équivalent, formé à partir d'un fil métallique.

Une des méthodes de dépôt d'un produit de liaison sur le fil consiste à diluer ou à rendre soluble le produit de traitement dans un solvant donné puis, dans une première phase du traitement à déposer le liquide sur la surface du fil et dans une deuxième phase à éliminer le solvant par vaporisation.

Une attention toute particulière doit alors être portée à la quantité précise de dépôt liquide formé à la surface du fil. Il importe en effet de s'assurer que la couche de liquide déposée, qui est généralement de faible épaisseur, soit la plus régulière possible pour s'assurer de la régularité des propriétés du fil sur toute sa longueur.

A cet effet, les techniques connues de mouillage ou d'enduction consistent à faire circuler le fil dans un bain liquide formé d'un solvant volatil contenant le soluté que l'on désire déposer. En trempant dans le bain, la solution liquide se dépose sur le fil. Le fil est ensuite séché de manière à extraire le solvant, et le soluté se dépose sur le fil. La phase de séchage s'effectue par un apport d'énergie thermique dit externe, dont la transmission s'effectue par rayonnement ou conduction depuis la source de chaleur vers la surface externe du liquide déposé sur le fil, et par conduction depuis la surface externe du liquide déposé sur le fil vers l'interface entre le fil et le liquide, puis de la surface du fil vers l'intérieur du fil. Ce type de procédé est décrit à titre d'exemple dans la publication JP 2004134320.

Il s'avère néanmoins que la maîtrise de la quantité de liquide déposée sur le fil peut varier, en raison par exemple des variations de vitesse de circulation du fil dans le bain ou d'une variation des caractéristiques rhéologiques de la solution.

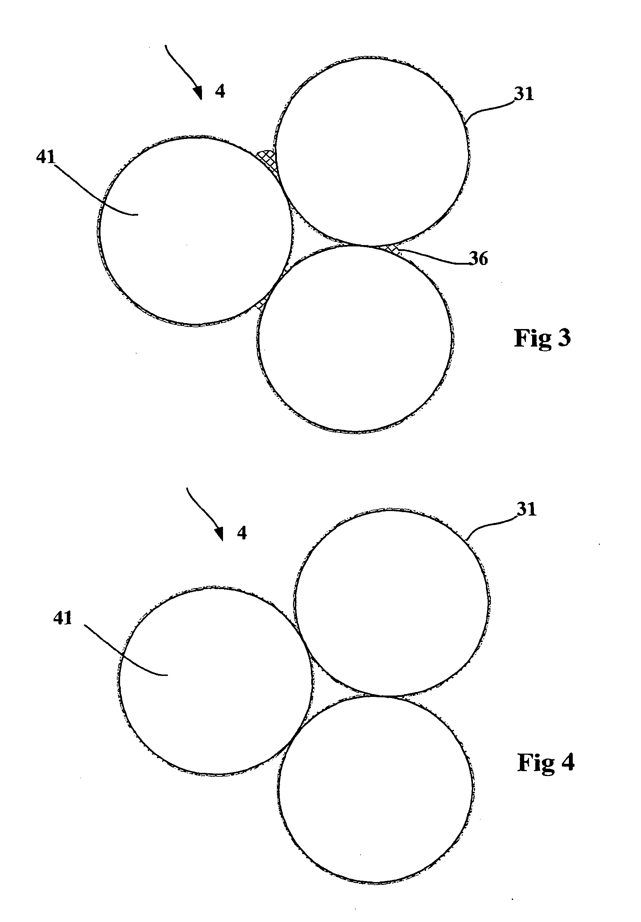

Il résulte de ces variations que la quantité de soluté déposée sur le fil varie en proportion de manière plus ou moins importante. En effet, lors de l'évaporation progressive du solvant, sous l'effet de la tension superficielle régnant dans le liquide et de la courbure du fil, le soluté va se concentrer dans les zones où le solvant est encore présent, à savoir dans les zones où les épaisseurs de liquide déposées sont plus importantes telles que les espaces entre les filaments unitaires composant le fil, ou les espaces entre les câblés lorsque le fil est composé de plusieurs retors. Lorsque l'on observe le fil au microscope, ce phénomène de reconcentration provoque des ménisques localisés à forte concentration de soluté, entre les cablés par exemple, et des zones dénuées de tout dépôt, sur le dos des fils par exemple. Ce phénomène est illustré, de manière schématique à la figure 3, comme on le verra ci après.

Il en découle que l'apparition de ménisque se produit essentiellement lorsque le fil à recouvrir est fait de l'assemblage d'au moins deux filaments unitaires.

L'invention a pour objet d'apporter une solution à ce problème, à savoir la recherche d'une meilleure homogénéité du dépôt sur la surface des fils, lorsque l'on cherche à traiter des fils métalliques en déposant un film de soluté à la surface du fil.

Il a été mis en évidence que, lorsque l'on fait circuler le fil dans un bain de liquide puis que l'on augmente violemment la température du fil, on fait passer brutalement de la phase liquide à la phase gazeuse le liquide déposé sur sa surface. Le soluté laissé libre par la part de solvant qui s'est vaporisée se dépose alors sur la surface du fil, et l'onde de pression formée par les bulles de vapeur qui se développent à la surface du fil, éjecte le liquide en excès.

On observe alors que le soluté présent à la surface du fil n'a pas été entraîné par le liquide éjecté, et que la quantité de dépôt de soluté correspond sensiblement à la part de soluté contenue dans le liquide qui s'est évaporé et que l'on peut doser facilement en mesurant les quantités de liquide restituées et la prise de poids du fil.

Selon l'invention, le procédé de dépose d'un soluté sur un fil métallique se caractérise en ce qu'il comprend les étapes au cours desquelles :
- on dépose sur le fil une solution liquide formée d'un solvant volatil et dudit soluté puis,
- on élève rapidement la température du fil à une température supérieure à la température de vaporisation du solvant de manière à vaporiser le solvant placé au contact de la surface dudit fil, et à former des bulles de vapeur qui, en se dilatant, génèrent une impulsion de pression provoquant l'éjection du liquide restant à la périphérie du fil.

Le dispositif de dépose d'un soluté sur un fil comprend des moyens de circulation du fil aptes à conduire le fil au travers dudit dispositif à une vitesse donnée, des moyens de dépose d'une solution formée d'un solvant et dudit soluté, et un moyen de chauffage situé en aval du moyen d'enduction. Ledit moyen de chauffage comprend des moyens aptes à élever rapidement la température à la surface du fil.

L'énergie fournie par l'inducteur au fil se transforme en énergie thermique, laquelle énergie thermique est transmise au liquide par conduction depuis la surface du fil.

La description qui suit a pour objet de mettre en évidence le fonctionnement de l'invention en s'appuyant sur un mode de réalisation particulier et en s'appuyant sur les figures 1 à 4 dans lesquelles :
- la figure 1 représente une vue schématique d'un dispositif selon l'invention,
- la figure 2 représente une vue schématique du fil au moment de la formation des bulles de vapeur et de l'éjection du liquide,
- la figure 3 représente un fil recouvert d'une couche de soluté et sur lequel apparaissent des ménisques aux interfils,
- la figure 4 représente une vue schématique d'un fil mis en oeuvre à l'aide d'un procédé selon l'invention,

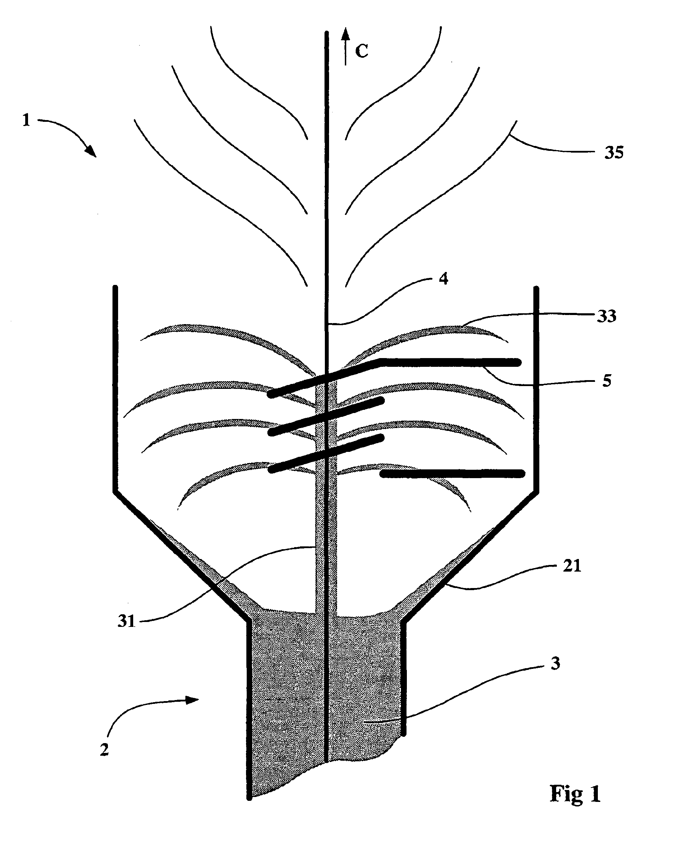

La figure 1 montre un dispositif 1 selon l'invention, au travers duquel circule un fil 4. Des moyens de circulation du fil (non représentés) font avancer le fil dans la direction de la flèche C. Comme on le verra par la suite, et selon le mode de réalisation de l'invention faisant l'objet de la présente description il importe que le fil soit un bon conducteur de l'électricité et peu sensible aux échauffements rapides, ce qui conduit, en première approche, à limiter le procédé et l'usage du dispositif aux fils métalliques.

Le fil traverse un moyen d'enduction 2 formé par un bain contenant un liquide 3 composé d'un solvant et d'un soluté. Le soluté peut se présenter sous forme ionique ou encore sous la forme d'une émulsion ou d'une dispersion de particules.

En traversant le bain de liquide le fil est recouvert, d'une couche 31 de liquide 3. Le procédé d'enduction, connu en soi de l'état de la technique, peut être formé d'un bain dans lequel le fil circule horizontalement ou par un conduit vertical dans lequel le liquide circule à contresens de la direction de circulation du fil, comme cela est illustré à la figure 1.

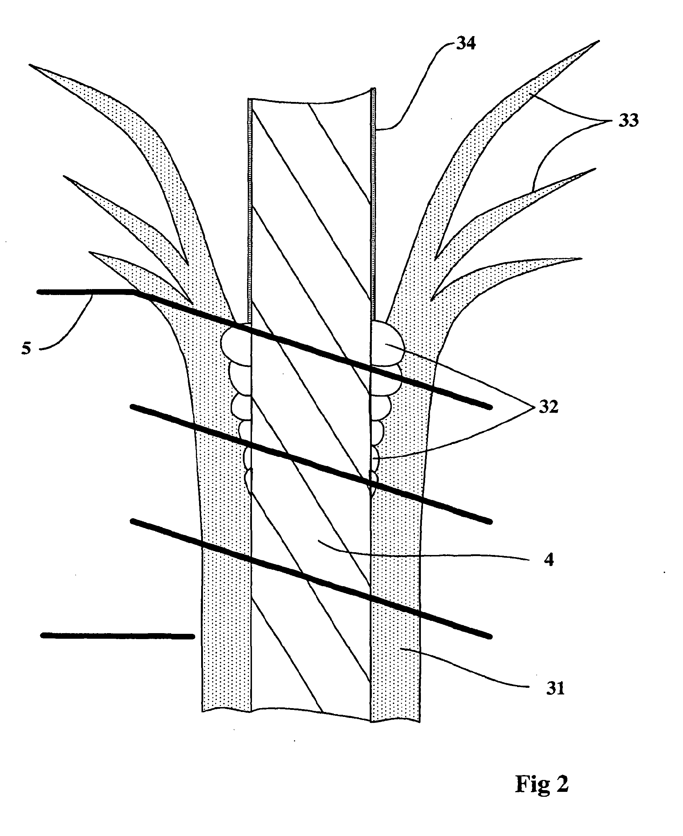

En sortie du bain, le fil 4 traverse un inducteur 5 dans lequel circule un courant électrique. L'inducteur porte brusquement le fil à une température très supérieure à la température de vaporisation du solvant. Ceci a pour effet, comme cela est illustré à la figure 2, de former des bulles de vapeur 32 à la surface du fil 4. La croissance rapide des bulles de vapeur 32 provoque l'éjection sous forme d'éclaboussures 33 du liquide 3 restant à la périphérie du fil 4. Un système de récupération 21 permet de collecter l'excédent de liquide en vue de sa réutilisation dans le bain.
La puissance de l'inducteur 5 est réglée en fonction de la vitesse de circulation du fil, de manière à obtenir une température de surface apte à générer l'effet de flash permettant d'éjecter le liquide de la surface du fil. Il est donc préférable de disposer d'un inducteur relativement court de manière à ce que la montée en température de la surface du fil soit rapide. D'autre part, compte tenu de la forte intensité du courrant circulant dans l'inducteur le nombre de spires sera également réduit.

Il est important que les bulles 32 se forment à partir de la surface du fil 4 de manière à ce que l'effet propulseur de la vapeur en expansion soit maximum. Aussi, la nature métallique du fil, dans lequel circule un courant induit dans la portion de fil située au passage de l'inducteur 5, a pour effet que le fil s'échauffe beaucoup plus rapidement que le liquide disposé à sa périphérie. La propagation thermique vers le liquide s'effectue principalement par conduction depuis la surface du fil vers le liquide.

En régulant la puissance de l'inducteur ou la vitesse de défilement du fil on arrive donc à moduler la quantité d'extrait sec de soluté déposé à la surface du fil. En effet, on observera que la quantité de soluté déposée sur le fil est sensiblement proportionnelle à la quantité de vapeur générée pendant la phase d'expulsion pour une concentration de soluté dans le solvant donnée,

Il s'en suit que, plus la puissance de l'inducteur est importante, plus la formation des bulles est rapide et violente et, en augmentant la puissance dissipée par l'inducteur, ou en ralentissant la vitesse de passage du fil, on diminue la quantité d'extrait sec demeurant à la surface du fil en sortie du dispositif. En réduisant la puissance de l'inducteur, ou en augmentant la vitesse de passage du fil, on rend le phénomène d'éjection moins violent, et il est nécessaire de vaporiser sous forme de bulles une plus grande quantité de solvant pour éjecter tout le liquide présent à la surface du fil. Il s'en suit que la quantité de soluté déposée sur le fil augmente.

On veillera toutefois à ne pas réduire la puissance de l'inducteur en dessous d'une certaine limite. En effet lorsque cette puissance est insuffisante, le liquide est éjecté particllement, ce qui nuit à la qualité de l'effet recherché.

Afin d'améliorer l'efficacité de l'éjection, il est possible d'amener le liquide dans le bain à une température légèrement inférieure à la température de vaporisation du solvant de manière à ce que l'apport d'énergie provenant de l'inducteur puisse servir directement à la formation rapide des bulles de vapeur. On entend par légèrement inférieure, une temperature inférieure de 5°C à 10°C à la température de vaporisation du solvant.

Le dispositif faisant l'objet de la présente description présente également l'avantage de permettre une circulation du fil au sein du moyen de séchage sans que ledit fil soit en contact avec ledit moyen de chauffage 5. Ainsi, en plaçant judicieusement les moyens de guidage du fil en sortie du dispositif, il est possible d'éviter tout contact mécanique avec le fil susceptible de dégrader la formation du dépôt avant que le solvant soit totalement évacué.

En sortie du dispositif à induction, la surface du fil 4 est pratiquement exempte de liquide. Seules subsistent quelques traces de liquide infiltrées dans la structure interne du fil. Il est alors possible de procéder au refroidissement et au séchage final du fil par évaporation des dernières traces de solvant. Le séchage final est réalisé, si nécessaire, à l'aide de moyens connus (non représentés) tels qu'un balayage par un courrant d'air sec. Dans le cas général la température du fil en sortie de procédé est suffisante pour provoquer, par inertie thermique, l'évaporation de ces traces de solvant 35.

La surface du fil 4 est recouverte, d'une fine couche de soluté 34 correspondant sensiblement, en proportion des concentrations, à la quantité de solvant évaporée. Ainsi, la quantité de soluté 34 déposée sur le fil dépend essentiellement de la concentration du soluté dans le liquide 3 de base et de la quantité de vapeur formée sous l'action de l'inducteur. Cette quantité de vapeur dépend des paramètres de réglage du procédé tels que la vitesse de circulation du fil ou encore de la puissance de l'inducteur. L'épaisseur du film est sensiblement constante et homogène en tout point de la surface du fil, et ne présente pas de surépaisseurs localisées comme des ménisques.

On observe enfin, que ce procédé permet de déposer une quantité relativement constante de soluté à la surface du fil, quelle que soit la quantité de liquide emmenée par le fil à rentrée du moyen de chauffage. En effet, en raison de la rapidité de formation des bulles de vapeur provoquant une éjection soudaine du liquide seule la partie du liquide en contact direct avec le fil se vaporise. L'effet propulseur des bulles de vapeur est suffisant pour éjecter la quantité restante de liquide. Il est ainsi possible d'obtenir un dépôt relativement régulier à la surface du fil en régulant la quantité d'énergie conférée au fil.

De plus, en raison de la relative soudaineté du phénomène, on évite la reconcentration du soluté présent à sur la surface du fil et la formation de ménisques que l'on observe lorsque le temps de séchage est plus long. De cette manière, le soluté est réparti de manière beaucoup plus régulière sur la surface du fil. Cette dernière propriété est particulièrement importante lorsque on traite les fils métalliques destinés à la réalisation des fibres de renfort utilisées dans les pneumatiques. Ces fils sont généralement enrobés dans du caoutchouc et constituent des nappes de renfort de la carcasse ou de la ceinture sommet. Il convient donc de favoriser la liaison entre les fils métalliques le caoutchouc.

Il est connu par ailleurs que l'on améliore cette liaison en déposant sur le fil une fine couche d'une composition à base de silane. En améliorant la régularité du dépôt, on améliore la qualité de la liaison et par voie de conséquence la résistance du pneumatique.

Ce type de revêtement permet d'améliorer de manière très sensible la force d'adhésion du fil au matériau de nature caoutchoutique dans lequel ledit fil est enrobé. Ces propriétés améliorées permettent d'augmenter la résistance des nappes de renfort lors de l'usage du pneumatique, ainsi que la résistance à la pénétration des agents oxydants susceptibles de corroder le fil et d'en modifier la résistance.

Lorsqu'on utilise la méthode classique de dépôt de silane en faisant circuler le fil dans un bain comprenant une solution d'eau et de silane et que l'on sèche le fil en le faisant circuler dans un four dans lequel on apporte de l'énergie thermique externe, le dépôt de silane présente des surépaisseurs localisées importantes. Ces surépaisseurs, ou ménisques, peuvent être comprises entre 1 et 30 µm. La figure 3 illustre le cas d'un fil 4 formé par l'assemblage de trois filaments élémentaires 41 et recouvert d'une couche de silane 31. Des ménisques 36 sont visibles aux espaces compris entre les fils.

Le silane a, de préférence, la formule suivante : 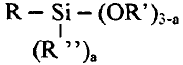 dans laquelle R représente un radical organique contenant au moins une fonction susceptible de réagir avec au moins de la composition caoutchoutique dans les quel le renfort est enrobé. Chaque OR' représente un groupe susceptible de réagir avec un oxyde ou un hydroxyde de la surface de l'acier ; chaque R" représente, de façon indépendante, l'hydrogène, un radical organique cyclique ou acyclique, ou un halogène ; a peut avoir une valeur nulle et une valeur au plus égale à 2.

Le radical R est de préférence porteur d'un hydroxyalkyle, un aminoalkyle, un polyaminoalkyle, un époxyalkyle, notamment un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison éthylénique, de préférence une double liaison éthylénique activée.

On rappelle que de manière connue, une liaison "activée" est une liaison rendue plus apte à réagir, en l'occurrence, ici, avec l'élastomère diénique. La double liaison éthylénique (>C=C<) du radical R est de préférence activée par la présence d'un groupe électro-attracteur adjacent, c'est-à-dire fixé sur un des deux atomes de carbone de la double liaison éthylénique, ce groupe électro-attracteur ou "activant" étant notamment choisi parmi ceux porteurs d'au moins une des liaisons C=O, C=C, C≡C, OH, O-Alkyle ou O-Aryle, ou d'au moins un atome de soufre et/ou d'azote, ou d'au moins un halogène. Par définition, un groupe "électro-attracteur" est un radical ou groupe fonctionnel susceptible d'attirer les électrons à lui-même plus que ne le ferait un atome d'hydrogène s'il occupait la même place dans la molécule considérée.

Les radicaux R', identiques ou différents s'ils sont plusieurs (a = 0 ou 1), sont notamment choisis parmi l'hydrogène ou un radical organique ou organométallique, cyclique ou acyclique ; lorsque R' est un radical organométallique, il comporte de préférence au moins un atome de silicium. Chaque R' est de préférence, de façon indépendante, l'hydrogène, un alkyle ayant de 1 à 6 atomes de carbone, un radical organométallique comportant de 1 à 6 atomes de carbone et au moins un atome de silicium.

Les radicaux R", identiques ou différents s'ils sont plusieurs (a = 2), sont de préférence choisis parmi les alkyles ayant de 1 à 6 atomes de carbone, par exemple les radicaux méthyle et/ou éthyle.

L'organosilane de départ est choisi de préférence dans le groupe constitué par les amino-alkyl(C₁-C₆)-alkoxy(C₁-C₆)silanes, les acryloxy-alkyl(C₁-C₆)-alkoxy(C₁-C₆)silanes, les methacryloxy-alkyl(C₁-C₆)-alkoxy(C₁-C₆)silanes, les glycidoxy-alkyl(C₁-C₆)-alkoxy(C₁-C₆)silanes, les mercapto-alkyl(C₁-C₆)-alkoxy(C₁-C₆)silanes, les di- ou polysulfures d'alkyl(C₁-C₂₀)-alkoxy(C₁-C₆)silanes, les maléimido-akyl(C₁-C₆)akoxy(C₁-C₆)silanes, les isomaléimido-alkyl(C₁-C₆)-alkoxy(C₁-C₆)silanes, les acides N-[alkyl(C₁-C₆)alkoxy(C₁-C₆)silyl] maléamiques, ou un mélange de ces composés.

Comme exemples particuliers de tels silanes utilisables dans l'interphase adhésive des composites selon l'invention, peuvent être cités le 3-aminopropyl-triéthoxysilane, le 3-métacryloxypropyl-triméthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyl-triméthoxysilane, le 3-aminoéthyl-triéthoxysilane, le 3-métacryloxypropyl-triéthoxysilane, le 3-glycidoxyéthyl-triéthoxysilane, le 3-mercaptopropyl- triéthoxysilane, le N-béta-aminoéthyl-3-aminoéthyl-triméthoxysilane, le 3-aminobutyl- triéthoxysilane, le 3-aminoéthyl-triméthoxysilane, le 3-aminopropylméthyl-diéthoxysilane, le tétrasulfure de bis-triéthoxysilylpropyle, le tétrasulfure de bis-triméthoxysilylpropyle, le 3-maléimidopropyltriéthoxysilane, l'acide (N-propyltriéthoxysilyl) maléamique.

Comme autres exemples particuliers d'organosilanes, on peut citer également le p-(triméthoxysilyl) benzyldiazoacétate, le 4-(triméthoxysilyl)cyclohexylsulfonyl azidure, le 6-(triméthoxysilyl)hexylsulfonyl azidure.

Le silane est choisi plus préférentiellement dans le groupe constitué par le 3-aminopropyl-triéthoxysilane, le N-béta-aminoéthyl-3-aminopropyl-triméthoxysilane, le 3-glycidoxypropyl-triméthoxysilane, le 3-mercaptopropyl-triméthoxysilane, le 3-aminopropyl-méthyl-diéthoxysilane, le 3-maléimidopropyltriéthoxysilane, le tétrasulfure de bis-triéthoxysilylpropyle, et les mélanges de ces organosilanes.

Avantageusement, on utilise un amino-alkyl(C₁-C₆)akoxy(C₁-C₆)silane, en particulier le 3-amino-propyl-triéthoxysilane, ou un maléimido-alkyl(C₁-C₆)-akoxy(C₁-C₆)silane, en particulier le 3-maléimidopropyltriéthoxysilane.

A titre d'exemple, en utilisant un inducteur, comprenant deux spires, d'une longueur d'action de 10 mm, et d'une puissance efficace de 1000 W, dans lequel circule un fil métallique de diamètre 0,8 mm à la vitesse de 300 m/min, enduit d'une solution comprenant du silane dilué à 5% dans de l'eau.

La température du fil est portée à environ 170°. On obtient un dépôt d'un film de silane dont l'épaisseur, en tout point de la surface du fil, est comprise entre 10 et 100 nm, et de préférence, comprise entre 30 et 50 nm. Cette épaisseur est homogène et ne comporte aucune surépaisseur ni aucun ménisque.

L'épaisseur du film reste donc, en tout point de la surface du fil, inférieure à l'épaisseur d'un ménisque qui peut varier, comme on l'a vu ci-dessus, de 1 µm à 30 µm. Cette épaisseur du film de silane est même très largement inférieure à 0,1 µm.

La figure 4 illustre le cas d'un fil 4 comprenant trois filaments élémentaires 47 dont le diamètre correspond aux diamètres des fils couramment utilisés dans l'industrie du pneumatique, et qui peut varier 0,05mm à 0,3mm. Le fil 4 est recouvert d'un film 31 dont l'épaisseur est sensiblement constante sur toute la surface du fil et qui ne présente pas de ménisques aux interfils.

Des essais réalisés avec une solution contenant du latex en émulsion dans de l'eau, ont également donnés de bons résultats.

## Revendications

1. Procédé de déposée d'un soluté (34) sur un fil métallique (4), comprenant une première étape au cours de laquelle on dépose sur le fil (4) une solution liquide (3) formée d'un solvant volatil et dudit soluté (34), suivi d'une seconde étape, **caractérisée en ce qu'**on élève rapidement la température du fil (4) à une température supérieure à la température de vaporisation du solvant de manière à vaporiser le solvant placé au contact de la surface dudit fil (4), et à former des bulles de vapeur (32) qui, en se dilatant, génèrent une impulsion de pression provoquant l'éjection du liquide (33) restant à la périphérie du fil.

2. Procédé selon la revendication 1, dans lequel on élève la température du fil métallique (4) à l'aide d'un dispositif électrique de chauffage à haute fréquence par induction (5).

3. Procédé selon la revendication 2 dans lequel, pour une concentration donnée de soluté dans le solvant, la quantité de soluté déposée sur le fil est inversement proportionnelle à la puissance dissipée par le dispositif de chauffage

4. Procédé selon la revendication 3, dans lequel, on régule la quantité de soluté déposée sur le fil en faisant varier la puissance dissipée par le système de chauffage.

5. Procédé selon l'une des revendications 1 à 4, dans lequel on amène la solution liquide (3) à une température légèrement inférieure à la température de vaporisation du solvant au cours de l'étape de dépose de la solution liquide sur le fil.

6. Procédé selon l'une des revendications 1 à 5, dans lequel la solution liquide (3) est formée de silane mélangé dans de l'eau.

## Patentansprüche

1. Verfahren zum Ablagern eines gelösten Stoffs (34) auf einem Metalldraht (4), das einen ersten Schritt umfasst, in dessen Verlauf auf dem Draht (4) eine flüssige Lösung (3), die aus einem flüchtigen Lösungsmittel und dem gelösten Stoff (34) gebildet ist, abgelagert wird und auf den ein zweiter Schritt folgt, **dadurch gekennzeichnet, dass** die Temperatur des Drahts (4) schnell auf eine Temperatur erhöht wird, die höher ist als die Verdampfungstemperatur des Lösungsmittels, so dass das mit der Oberfläche des Drahts (4) in Kontakt gebrachte Lösungsmittel verdampft und Dampfblasen (32) gebildet werden, die, indem sie sich ausdehnen, einen Druckimpuls erzeugen, der das Beseitigen von Flüssigkeit (33), die auf dem Umfang des Drahts zurückgeblieben ist, verursacht.

2. Verfahren nach Anspruch 1, wobei die Temperatur des Metalldrahts (4) mit Hilfe einer elektrischen Hochfrequenz-Induktionsheizvorrichtung (5) erhöht wird.

3. Verfahren nach Anspruch 2, wobei für eine gegebene Konzentration des gelösten Stoffs in dem Lösungsmittel die Menge des auf dem Draht abgelagerten gelösten Stoffs zu der von der Heizvorrichtung abgeführten Leistung umgekehrt proportional ist.

4. Verfahren nach Anspruch 3, wobei die Menge des gelösten Stoffs, der auf dem Draht abgelagert wird, reguliert wird, indem die von dem Heizsystem abgegebene Leistung variiert wird.

5. Verfahren nach einem der Ansprüche 1 bis 4, wobei die flüssige Lösung (3) im Verlauf des Schrittes des Ablagerns der flüssigen Lösung auf dem Draht auf eine Temperatur gebracht wird, die etwas niedriger ist als die Verdampfungstemperatur des Lösungsmittels.

6. Verfahren nach einem der Ansprüche 1 bis 5, wobei die flüssige Lösung (3) aus mit Wasser vermischtem Silan gebildet ist.

## Claims

1. Method of depositing a solute (34) on a metal thread (4), comprising a first step during which a liquid solution (3), formed from a volatile solvent and said solute (34), is deposited on the thread (4), followed by a second step, **characterized in that** the temperature of the thread (4) is rapidly raised to a temperature above the vaporization temperature of the solvent so as to vaporize the solvent placed in contact with the surface of said thread (4) and to form vapour bubbles (32) which, by expanding, generate a pressure pulse that ejects the liquid (33) remaining on the periphery of the thread.

2. Method according to Claim 1, in which the temperature of the metal thread (4) is raised by means of a high-frequency electric induction heater (5).

3. Method according to Claim 2, in which, for a given solute concentration in the solvent, the amount of solute deposited on the thread is inversely proportional to the power dissipated by the heater.

4. Method according to Claim 3, in which the amount of solute deposited on the thread is regulated by varying the power dissipated by the heating system.

5. Method according to one of Claims 1 to 4, in which the liquid solution (3) is brought to a temperature slightly below the vaporization temperature of the solvent during the step of depositing the liquid solution on the thread.

6. Method according to one of Claims 1 to 5, in which the liquid solution (3) is formed from a silane mixed with water.
